# EUROPEAN PATENT APPLICATION

(11) **EP 4 342 288 A1**
(43) Date of publication of application: **27.03.2024**
(21) Application number: 23197578.0
(22) Date of filing: 15.09.2023
(51) Int. Cl.: A01G 24/15, A01G 24/20, A01G 24/42, A01G 24/44, C05F 9/04, C05G 3/80

(54) **CULTIVATION MEDIUM FOR PLANT CULTIVATION, CULTIVATION MIXTURE FOR PRESSURE INJECTION TO PLANT ROOTS, METHOD OF THEIR PRODUCTION AND USE THEREOF**

(30) Priority: 16.09.2022 CZ 20220392
(71) Applicant: Ceská zemedelská univerzita v Praze, 16521 Praha 6 (CZ); Groown s.r.o, 25163 Strancice (CZ)
(72) Inventor: Trakal, Lukas, Praha (CZ); Vosatka, Miroslav, Praha (CZ); Hajkova, Katerina, Praha (CZ); Hnatkova, Tereza, Praha (CZ); Pohorely, Michael, Praha (CZ); Hausenblas, Michal, Strancice (CZ)
(74) Representative: Harber IP s.r.o.

(57) **Abstract**

The present invention relates to a cultivation medium in the form of a granulate or in the form of a pellet, growing rug, pot or planter, which comprises a plant cultivation mixture comprising from 20 to 80 wt. % of fiber, from 1 to 50 wt. % of biochar, from 0 to 30 wt. % of plant fibres, based on dry weight of the mixture, and further comprises at least 250 spores of mycorrhizal fungi per 1 kg of dry weight of the mixture, wherein the mycorrhizal fungi are selected from the group comprising arbuscular mycorrhizal fungi, ectomycorrhizal fungi, ericoid mycorrhizal fungi, mycoparasitic fungi, yeasts and actinomycetes,
and at least 5·10⁸ CFU of microorganisms for plant growth enhancement per 1 kg of dry weight of the mixture, wherein the microorganisms are selected from the group comprising rhizobacteria, microalgae and cyanobacteria. The quantity of mycorrhizal fungi is at least 500 spores·m⁻² of the cultivation medium and the quantity of microorganisms for plant growth enhancement is at least 10⁹ CFU·m⁻² of the cultivation medium. The present invention further relates to a cultivation mixture for pressure injection towards plant roots, method of production thereof and their use.

## Description

### Field of Art

The present invention relates to a cultivation medium or mixture that is suitable for the production of products for growing plants and for long-term support of their nutrition and growth, including increasing tolerance to environmental stress (e.g. drought, soil contamination, etc.) and/or for minimising transplant shock during planting. The mixture and cultivation medium containing said mixture increases the retention capacity of water and nutrients. Products from said mixture, such as flower pots, cultivation inserts, planters, vegetation rugs, or vegetation and grass tarps or pellets and granules, are 100% biodegradable with a proven synergistic effect of all components, positively supporting the nutrition and growth of cultivated plants.

### Background Art

Nowadays, there are various types of flower pots and planters on the market. These products are made of paper or eventually of peat. The use of paper flower pots or planters is desirable when the emphasis is on limiting single-use plastics. Biodegradable flower pots and planters are made from recycled paper or other plant fibres but do not contain any ingredients to support root growth. It is, therefore, only a carrier with no added value that would affect the plant's growth. These products do not contain any additives to improve soil quality and/or promote plant health and growth. Although there are substrates on the market containing mycorrhizal fungi, plant-beneficial bacteria or biochar or biofertilisers, none of the cases is a combination of these.

Other products used in growing plants are various pellets or granules (granulate) containing biofertilisers, synthetic fertilisers, or beneficial soil microorganisms. However, in none of these cases it is a combination of all the listed components.

In the case of establishing greenery on extreme or sloping surfaces, grass rugs or geotextiles are commonly used. However, these do not contain the components above that would improve the effectiveness of greening.

In the current state of the art, there is no comprehensive solution for producing biodegradable pellets, granules, flower pots, planters, or rugs with the advantages of water and nutrient retention and root growth support. This also applies to the case of pressure injection of this mixture directly to the plant roots.

### Disclosure of the Invention

The present invention relates to a mixture for growing plants, combining the properties of fiber, biochar, plant fibres, fertiliser, mycorrhizal fungi and microorganisms. Surprisingly, this combination has a synergistic (not merely additive) technical effect of promoting long-term and highly efficient nutrition and growth of cultivated plants, reducing transplant shock and increasing their tolerance towards environmental stress. The products from plant cultivation mixture according to the present invention have the advantages of containing the following:
- biodegradable material (e.g. hemp fibre pulp, secondary pulp), desintegrated biomass (obtained using e.g. scutching mills);
- originally organic material with slow nutrient release and water retention (biochar);
- biotisation by beneficial microorganisms (plant growth promoting rhizobacteria, mycorrhizal fungi and mycoparasitic fungi);
- all the nutrients needed for plant growth (NPK + other macro- and micronutrients from the list of fertilisers, fertilising agents and additives preferably meeting organic farming conditions).

Together, all these ingredients (in a pre-determined ratio) create a unique material with a positive synergistic effect on plant growth and the resulting soil quality.

The mixture according to the present invention can be used to produce several products - pots, planters, rugs, pellets of various shapes and sizes, or granules. The mixture can also be used for pressure injection directly towards the roots of plants, wherein the granulate (of a size not exceeding 4 mm, preferably of a size ranging from 1 to 4 mm, from the mixture according to the present invention) is mixed with light material (e.g. an expanded clay based on aluminosilicates with high porosity and bulk density < 0.6 g/cm³ and amount of water (volumetric water content - VWC) < 0.05 volumetric moisture content) in a weight ratio of granulate to lightweight material in the range of from 1:10 to 1:20, and is subsequently applied using an injection apparatus below the soil surface for revitalising trees, for example, urban greenery or orchards or vineyards.

### Definitions:

By fiber is meant biomass fiber, preferably lignocellulosic fiber, made from plant biomass, which has a binding function. To improve the homogenisation of the suspension and the dewatering capacity of the fiber, it is helpful to mill the fiber first to fibrillate the fibre and make them bind better together in producing the final product. It has been found that primary fiber binds biochar better than secondary fiber; however, both types are suitable enough for the final mixture. The milling grade of the primary pulp at 40 SR is advantageous, as at lower milling grades, the material does not achieve suitable mechanical properties, and conversely, at a milling grade of 65 SR, there is a problem with dewatering on the papermaking sieve. SR stands for Schöpper-Riegler grade, a standard unit used in the paper industry, and indicates the value to which the fiber is fibrillated. Unmilled fiber has an SR grade of around 15, and by milling it increases its water intake, typically milling ranges between 20 and 70 SR. The fiber milling can occur in a roller mill, the so-called Hollander beater. The degree of milling is measured according to ČSN ISO 5267-1 (2001) by taking a sample of suspension containing about 2 g of absolute dry fibres and filling this quantity with water to a volume of 1 litre in a graduated cylinder. After mixing, the suspension is poured into the cylinder of the milling grade apparatus, with the sealing bell in the down position. After 5 seconds, the sealing bell is released and raised. The water is drawn into two containers with an SR (Schöpper-Riegler) scale. The milling degree is read off the scale as soon as the water stops flowing through the side tube.

Primary fiber refers to the original chemical or mechanical processing of wood or biomass and includes, for example, sulphate, sulphite or natron pulp or wood pulp.

Secondary fiber means paper pulp that has already been processed once or more, e.g. recovered paper.

Pulp means fiber prepared only by chemical means from wood or biomass, for example by boiling wood chips in either an acid (sulphite) or alkaline (sulphate) pulping process.

Biochar means a solid material suitable for use in agriculture according to EU Implementing Regulation No. 2021/1165 of 15 July 2021 and Regulation (EU) 2019/1009 of the European Parliament and of the Council of 5 June 2019, obtained by thermochemical conversion of biomass in an oxygen-limited environment. The process of biochar production is similar to charcoal production in traditional (simpler) technologies, perhaps the oldest industrial technology developed by humankind. For the preparation of biochar, equipment designed for producing carbonaceous material by carbonisation, torrefaction, pyrolysis, thermolysis, gasification, partial oxidation or a similar design technology can be advantageously used. The production of biochar is described, for example, in Brynda, J., Skoblia, S., Pohořelý, M., Beňo, Z., Soukup, K., Jeremiáš, M., Moško, J., Zach, B., Trakal, L., Šyc, M., Svoboda, K. (2020): Wood chips gasification in a fixed-bed multi-stage gasifier for decentralized high-efficiency CHP and biochar production: Long-term commercial operation. Fuel 281, 118637). Preferably, the minimum biochar quality requirements for the present invention are as follows:
- H/C < 0.7
- H/C_{org} < 0.7
- C_{org} > 50% by weight
- O/C_{org} < 0.4
- O/C < 0.4
- 12 PAH sum < 20 mg/kg
- 16 PAH sum < 20 mg/kg
wherein H/C is the molar ratio of hydrogen (H) to carbon (C). The values of H and C are determined by elemental analysis, e.g. according to DIN 51732. H/C_{org} is the molar ratio of hydrogen (H) to organic carbon (C_{org}). Organic carbon means the carbon contained in organic molecules. See above for the determination of the H value. The C_{org} value is calculated by subtracting the inorganic carbon from the total carbon (C). The inorganic carbon is determined e.g. according to DIN 51726. The H/C and H/C_{org} indicators express the stability of the biochar. O/C_{org} is the molar ratio of oxygen (O) to organic carbon (C_{org}). The oxygen content is calculated after elemental analysis and determination of the ash content, e.g. according to DIN 51733. The organic carbon value (C_{org}) is calculated as described above. O/C is the molar ratio of oxygen (O) to carbon (C). The indicators O/C and O/C_{org} express stability when accounting for carbonates and the amount of polar functional groups and hydrophobicity of the biochar. The 12 PAH sum is the sum of the content of twelve selected polycyclic aromatic compounds (sum of anthracene, benzo(a)anthracene, benzo(b)fluoranthene, benzo(k)fluoranthene, benzo(a)pyrene, benzo(ghi)perylene, phenanthrene, fluoranthene, chrysene, indeno(1,2,3-cd)pyrene, naphthalene and pyrene). The content is determined, e.g. according to EN 16181. The 16 PAH sum is the sum of the content of sixteen selected polycyclic aromatic compounds (sum of naphthalene, acenaphthylene, acenaphthene, fluorene, phenanthrene, anthracene, fluoranthene, pyrene, benzo(a)anthracene, chrysene, benzo(b)fluoranthene, benzo(k)fluoranthene, benzo(a)pyrene, indeno(1,2,3-cd)pyrene, dibenzo(ah)anthracene and benzo(ghi)perylene). The content is determined, e.g. according to EN 16181. The polyaromatic hydrocarbon (PAH) content demonstrates the acceptable content of polyaromatic hydrocarbons as the leading organic pollutants that biochar may contain.

A suitable particle size of biochar is at most 0.5 mm, which ensures rapid wettability of the biochar, sufficient mixing within the prepared mixture and effective and quick enrichment of the biochar itself with nutrients in the liquid state. Furthermore, said size ensures that the particles do not disturb the structure of the final product.

Plant fibres mean, for example, hemp fibres or fibrous residues from agricultural and forestry production (e.g. straw residues, sawdust from sawmills, fibres from scutching mills, etc.) and, alternatively, macroalgae (in particular, Ascophyllum spp, Ecklonia spp., Fucus spp., Laminaria spp., Sargassum spp.). Plant fibres in plant cultivation mixtures provide better cohesiveness of the material in the manufacture of pots, planters and other products used as cultivation media. In the mixture, the plant fibres are used in a whole form and do not undergo any milling process.

Fertiliser means both organic and inorganic fertilisers and may be solid or liquid.

Organic fertilisers are, e.g. aqueous extract from vermicompost (vorm tea), peptides and amino acids (preferably containing glycine, proline, glutamic acid, alanine and/or hydroxyproline) or algae, chitin (e.g. from insect residues), manure, guano, digestate, etc. These are natural products with variable composition that are commonly used for fertilisation in agriculture. It is preferable to use a fertiliser certified for use in organic (bio)farming.

Inorganic fertilisers mean industrial PK, NP and NPK fertilisers. The inorganic fertilisers preferably contain ammonium nitrate, ammonium carbonate, ammonium sulphate and/or urea as a nitrogen source; preferably a phosphate anion (monohydrogen phosphate, dihydrogen phosphate, polyphosphate and/or phosphorus oxide) as a phosphorus source; preferably a potassium cation (KCl, potassium acetate, potassium nitrate, potassium sulphate and/or potassium hydrogen phosphate) as a potassium source.

An example of advantageous fertilisers can be found in the list of fertilisers eligible for organic farming, see https://eagri.cz/public/web/file/215714/Povolene_vstupy_do_pudy.pdf (Povolené vstupy do půdy v ekologickém zemědělství, Olomouc 2011); e.g. Dolophos (with a content >14 wt% P₂O₅; >30 wt% CaO; >3 wt% MgO), Patentkali (with a content >25 wt% K₂O; >9 wt% MgO; >40 wt% SO₃)), or various organic residues rich in NPK (e.g. aqueous extract from vermicompost, manure, compost, guano or chicken manure, etc.).

The aim of adding fertiliser to the plant cultivation mixture is to guarantee a minimum nutrient content in the final product of at least 0,3 % by weight of the total NPK content in the dry matter of the plant cultivation mixture. Total NPK content refers to the nitrogen, phosphorus and potassium content by weight.

Microorganisms for supporting plant growth ensure plant resistance, growth and healthy development. Rhizobacteria (especially Pseudomonas spp., e.g. P. fluorescens, P. putida; Bacillus spp., e.g. B. subtilis, B. megatherium, B. thuringiensis, B. licheniformis, B. pumilus; Azotobacter spp., Serratia spp., Paenibacillus spp., Azospirillum spp., Rhizobium spp., Bradyrhizobium spp., Burkholderia spp., Herbaspirillum spp., Rhodococcus spp., Acetobacter spp., Lycobacter spp., Agrobacterium spp.), microalgae and cyanobacteria (especially Scenedesmus spp., Chlorella spp., Dunadiella spp., Chlamydomonas spp., Botryococcus spp., Spirulina spp., Nannochloropsis spp., Schizochytrium spp., Synechocistis spp., Anabaena spp., Nostoc spp.) are suitable. Said microorganisms, together with the action of biochar, demonstrate synergistic positive effects on plant growth, yield, quality and tolerance to stresses from various environmental aspects, including drought stress, nutrient deficiency, or adverse effects of pathogens and diseases. The microorganisms may be added directly to the mixture and/or may preferably be applied to the product surface by application (spraying) in a solution of gum arabic, water or other adhesive agents. This spraying on the surface of the product dries immediately. All of the above mentioned microorganisms are commercially available.

Another component of the plant cultivation mixture is mycorrhizal fungi, selected from the group comprising arbuscular mycorrhizal fungi (especially Funneliformis spp., Rhizophagus spp., Glomus spp., Gigaspora spp., Acaulospora spp.), ectomycorrhizal fungi (especially Laccaria spp., Scleroderma spp., Pisolithus spp., Hebeloma spp., Amanita spp., Rhizopogon spp., Boletus spp., Suillus spp., Sebacina spp.), ericoid mycorrhizal fungi (especially Hymenoscyphus spp., Oidiodendron spp.), mycoparasitic fungi (especially Trichoderma spp., e.g. T. atroviride, T. harzianum, T. konignii; Pythium spp., e.g. Pythium oligandrum), yeast, actinomycete and other fungi (especially Aspergillus spp., Coniothyrium spp., Gliocladium spp., Purpureocillium spp. , Phlebiopsis spp., Beuaveria spp., Streptomyces spp., Rhodotorula spp., Sporobolomyces spp., Cryptococcus spp., Frankia spp., all representatives of dark sterile mycelia, e.g. Phialocephalla spp., such as Pezizales, Taphrinales). Mycorrhizal fungi can be added directly to the mixture or can be applied to the surface of the product by applying (spraying) in a solution of gum arabic or other adhesive agents or pure water. The above mentioned mycorrhizal fungi are commercially available.

Thus, the object of the present invention is a cultivation medium which is in the form of a dry bulk granulate or in the form of a pellet, growing rug, pot or planter, and which comprises a plant cultivation mixture comprising fiber and biochar, wherein the weight ratio of biochar to fiber is in the range of from 1:80 to 5:2 (corresponding to an amount of fiber from 20 to 80 wt%, and of biochar from 1 to 50 wt%, based on the dry weight of the mixture). The biochar particle size is at most 0.5 mm, which ensures rapid wetting of the biochar (leading to better permeability of the plant roots through the cultivation medium), sufficient mixing with the mixture to be prepared and effective and quick enrichment of the biochar itself with nutrients in the liquid state. Furthermore, said size ensures adequate strength of the final product, as the particles do not disturb the product's structure.

It is preferred to use milled fiber, preferably milled to a Schöpper-Riegler grade in the range of from 30 to 55 SR, most preferably milled to 40 SR.

The plant cultivation mixture further comprises at least 250 spores of mycorrhizal fungi per 1 kg of dry weight of the mixture, wherein the mycorrhizal fungi are selected from the group comprising arbuscular mycorrhizal fungi, ectomycorrhizal fungi, ericoid mycorrhizal fungi, mycoparasitic fungi, yeasts and actinomycetes, and at least 5·10⁸ CFU of microorganisms for plant growth enhancement per 1 kg of dry weight of the mixture, wherein the microorganisms are selected from the group comprising rhizobacteria, microalgae and cyanobacteria. The term CFU denotes the colony-forming unit. The weight percentages are based on the dry weight of the plant cultivation mixture.

The quantity of mycorrhizal fungi is at least 500 spores·m⁻² of the cultivation medium and the quantity of microorganisms for plant growth enhancement is at least 10⁹ CFU·m⁻² of the cultivation medium.

If the cultivation medium is in the form of dry bulk granulate, the maximum size of the granules is at most 4 mm; preferably, the size of the granules is in the range of from 1 to 4 mm; and more preferably from 2 to 3 mm. The cultivation medium in the form of a dry bulk granulate may be used e.g. for pressure injection below the soil surface directly to the roots in quantities in the range of from 100 to 500 g of dry bulk granulate for application to a single injection hole when treating trees.

If the cultivation medium is in the form of a pellet, it can be used to fertilise and supply stable organic matter (application to the soil or onto the soil around the plants being grown). The optimum pellet size is in the range of from 2 mm to 3 cm.

Growing rugs can be used, for example, to establish green roofs or lawns. The growing rug can be spread over the area, grass or plant seeds can be placed on it (or the seeds may be already stuck to the rug) and then covered with a layer of soil. After germination, the young plants receive nutrients from the growing rug and the soil, and, in addition, their root system is colonised by mycorrhizal fungi and other microorganisms present in the rug, which contributes to faster and healthier development of the plants grown. Pots and planters have an analogous effect.

In addition, all of these products are entirely biodegradable.

In one embodiment, the content of mycorrhizal fungi in the mixture is at least 500 spores per kilogram of dry matter and the content of microorganisms is at least 5·10⁹ CFU per kilogram of dry matter of the mixture.

The content of biochar in the mixture according to the present invention is preferably from 5 to 45 % by weight, more preferably from 10 to 40 % by weight, even more preferably from 20 to 30 % by weight, based on the dry weight of the mixture.

The cultivation medium may further comprise from 0 to 30 % by weight, preferably from 1 to 25 % by weight, of plant fibres, based on the dry weight of the mixture. Preferably, the plant fibres are selected from the group comprising hemp fibres, fibrous residues from agricultural and forestry production (straw, sawdust), macroalgae. Therefore, the weight ratio of biochar to the total of fiber and plant fibres is in the range of from 1:99 to 1:1.

In one embodiment, the fiber is selected from the group comprising lignocellulosic fiber, primary or secondary fiber, sulphate pulp and natron pulp.

In a preferred embodiment, the fiber is selected from the group comprising lignocellulosic fibre in combination with plant fibres from the group comprising hemp fibres or fibrous residues from agricultural and forestry production.

In one embodiment, the plant cultivation mixture further comprises a fertiliser, preferably selected from the group comprising aqueous vermicompost extract, peptides, amino acids, algae, manure, guano, digestate, PK, NP and NPK fertilisers. Preferably, the amount of fertiliser in the mixture is such that the resulting plant cultivation mixture contains at least 3 g of the macronutrients - nitrogen, phosphorus and potassium (NPK) per 1 kg of dry weight of the mixture, more preferably at most 30 g NPK per 1 kg of dry weight of the mixture, even more preferably in the range of from 5 to 20 g NPK per 1 kg of dry weight of the mixture, yet even more preferably in the range of from 10 to 15 g NPK per 1 kg of dry weight of the mixture.

In one embodiment, the mycorrhizal fungi are selected from the group comprising genera Funneliformis, Rhizophagus, Glomus, Gigaspora, Acaulospora, Laccaria, Scleroderma, Pisolithus, Hebeloma, Amanita, Rhizopogon, Boletus, Suillus, Sebacina, Hymenoscyphus, Oidiodendron, Trichoderma, Pythium, yeast, actinomycetes, Aspergillus, Coniothyrium, Gliocladium, Purpureocillium, Phlebiopsis, Beuaveria, Streptomyces, Rhodotorula, Sporobolomyces, Cryptococcus, Frankia, Phialocephalla, Pezizales and Taphrinales. Preferably, mycorrhizal fungi are selected from the Trichoderma group, such as Trichoderma harzianum.

In one embodiment, the plant growth promoting microorganisms are selected from the group comprising genera Pseudomonas, Bacillus, Azotobacter, Serratia, Paenibacillus, Azospirillum, Rhizobium, Bradyrhizobium, Burkholderia, Herbaspirillum, Rhodococcus, Acetobacter, Lycobacter, Agrobacterium, Scenedesmus, Chlorella, Dunadiella, Chlamydomonas, Botryococcus, Spirulina, Nannochloropsis, Schizochytrium, Synechocistis, Anabaena and Nostoc. Preferably, the microorganisms for promoting plant growth are selected from the group comprising the genus Bacillus, for example Bacillus subtilis, Bacillus velezensis, Bacillus megatherium, Bacillus licheniformis.

The present invention also provides a cultivation mixture for pressure injection towards plant roots, which comprises a cultivation medium in granular or pellet form as defined above, and further comprises expanded clay in a weight ratio in the range of from 1:10 to 1:20, based on the dry weight of the cultivation medium and the expanded clay. The expanded clays ensure a low weight of the resulting mixture, which is then more suitable for pressure injection towards the roots of plants. Preferably, said granules and/or pellets and/or particles of expanded clay have a size of at most 4 mm, more preferably from 1 to 4 mm.

The cultivation mixture (injection granulate) has a specific size so that it can be transported using an injection device into the soil.

The granulate/pellets are finalised by surface biotisation with spores of mycorrhizal fungi or lyophilised rhizosphere bacteria or lyophilised culture of Trichoderma spp. and other plant-beneficial organisms as described above. The biotisation is applied by sputtering the inoculum or spraying it in a suitable medium (preferably vegetable oils, such as rapeseed or sunflower oil).

For the cultivation mixture to be pressure injectable, it must also be light in weight. This is achieved by mixing granulate/pellets with expanded clay in a ratio of from 1:10 to 1:20.

The advantage of the plant cultivation mixture and the cultivation medium according to the present invention is the synergistic effect of all components, supporting plant growth. This is, amongst others, thanks to the anchoring of biochar, mycorrhizal fungi and microorganisms on the surface of the fiber and plant fibres, which leads to easier handling and more efficient use of the individual components of the mixture by plants. While the handling of biochar itself is complicated and its application to the soil leads to the primary absorption of water from the soil to the biochar and thus to the local primary drying of the soil, the cultivation medium already has the biochar enriched with nutrients and anchored on the plant fibres and fiber and thus no drying occurs of the soil around the root system of the growing plants.

Another object of the present invention is a method for producing the cultivation medium in the form of (i) granules of at most 4 mm in size, (ii) pellets of various shapes and sizes, (iii) a growing rug, or (iv) a pot or planter, which comprises the following steps:
(a) biochar with a particle size of at most 0.5 mm is mixed with a carrier medium in a weight ratio in the range of from 10:1 to 1:3, to form a biochar paste; the carrier medium is water and/or aqueous vermicompost extract and/or a solution of fertilisers in water or in vermicompost extract; biochar paste, if it contains an aqueous vermicompost extract and/or fertiliser, has the properties of a slow-release fertiliser because biochar absorbs liquid and any fertiliser is adsorbed into the structure of the porous biochar;
(b) the biochar paste from step (a) is mixed with fiber (preferably fiber milled to a Schöpper-Riegler grade in the range of from 30 to 55 SR) and, optionally, with plant fibres, wherein the weight ratio of the biochar paste to the sum of the weights of the fiber and plant fibres, if present, is in the range of from 0.01 to 4;
(c) the mixture from step (b) is homogenised and subsequently desintegrated; desintegration is preferably carried out using a knife mill, a so-called pulper, when the mixture is immobilized on pulp fibres; in this step, the biochar paste is evenly distributed to the fiber and, if present, to the plant fibres;
(d) the desintegrated mixture from step (c) is made into a growing rug, pot or planter by draining the pulped mixture on specially shaped sieves; for example, by drying at a temperature in the range of from about 60 °C to about 80 °C;
   or the desintegrated mixture from step (d) is made into granules or pellets, for example by means of an extruder or pelleting press; the granules and pellets may be of different shapes and sizes;
(e) a biotisation solution is applied to the product from step (d), that is, a rug, pot, planter, granule or pellet, and allowed to dry, wherein said biotisation solution comprises mycorrhizal fungi selected from the group comprising arbuscular mycorrhizal fungi, ectomycorrhizal fungi, ericoid mycorrhizal fungi, mycoparasitic fungi, yeasts and actinomycetes; and microorganisms for plant growth enhancement, selected from the group comprising rhizobacteria, microalgae and cyanobacteria. The advantage of applying the biotisation solution to the final product is the possibility of using smaller quantities of microorganisms and mycorrhizal fungi with the same effect as if they had been added to the mixture before the final product was formed. A further advantage is that the microorganisms and mycorrhizal fungi used are not endangered by the higher temperature during drying of the product in step (d). The resulting concentration of microorganisms and mycorrhizal fungi in the final product is preferably at least 250 spores of mycorrhizal fungi and at least 5.10⁸ CFU of microorganisms per kilogram of dry weight of the mixture.

In one embodiment, a solution of fertiliser in water is prepared before step (a), wherein the fertiliser is selected from the group comprising aqueous vermicompost extract, peptides, amino acids, algae, manure, guano, digestate, PK, NP and NPK fertilisers. The prepared aqueous fertiliser solution is subsequently used in step (a) as the carrier medium for the preparation of biochar paste. The amount of fertiliser in the solution is preferably such that the resulting cultivation medium contains at least 3 g of NPK per 1 kg of dry weight, more preferably at most 30 g of NPK per 1 kg of dry weight, even more preferably in the range of from 5 to 20 g of NPK per 1 kg of dry weight, even more preferably in the range of from 10 to 15 g of NPK per 1 kg of dry weight.

In a preferred embodiment, an aqueous vermicompost extract is used as the carrier medium in step (a), said extract being prepared by diluting vermitea (the aqueous vermicompost extract) with water in a volume ratio in the range of from 1:50 to 1:10. More preferably, NPK fertiliser is dissolved into said aqueous vermicompost extract thus prepared. The amount of aqueous vermicompost extract and fertiliser in the solution is preferably such that the resulting cultivation medium contains at least 3 g NPK per 1 kg of dry matter.

In one embodiment, the biotisation solution in step (e) comprises an aqueous solution of powdered cultures of the arbuscular mycorrhizal fungi Glomus mosseae, Glomus intraradices and Glomus deserticola; powdered cultures of Trichoderma harzianum; and powdered cultures of bacteria of genera Bacillus subtilis, Bacillus licheniformis, Bacillus velezensis, Bacillus megatherium. The weight distribution of all powdered cultures is the same (weight ratio 1:1:1:1:1:1:1). The powdered cultures of the arbuscular mycorrhizal fungi Glomus mosseae, Glomus intraradices, and Glomus deserticola contain a total of 5,000 fungal spores per 1 gram of powder, while the powdered cultures of Trichoderma harzianum, Bacillus subtilis, Bacillus licheniformis, Bacillus velezensis and Bacillus megatherium each contain 10¹⁰ CFU of microorganisms per 1 gram of powder. The powdered cultures are applied in such a quantity that the resulting total biotisation dose is at least 250 spores of mycorrhizal fungi and at least 5·10⁸ CFU of microorganisms per kilogram of dry weight of the mixture.

In a preferred embodiment, the biotisation solution is prepared by dissolving all of the above powders in the same weight ratio in water. More preferably, the resulting biotisation solution has a concentration in the range of from 1 to 10 % by weight, preferably in the range of from 2 to 6 % by weight. The biotisation solution thus prepared is preferably sprayed onto the pellets, growing rug, pot or planter from step (d) and allowed to dry. The final product combines the properties of all of its components, and their effect is synergistic.

In a preferred embodiment, the biotisation solution further comprises gum arabic in an amount of from 0.5 to 10 % by weight, based on the total weight of the biotisation solution, preferably from 2 to 5 % by weight of gum arabic, based on the total weight of the biotisation solution. The gum arabic improves the properties of the biotisation solution by allowing the biotisation components to better adhere to the final product and also, due to its stickiness before drying, it allows easier attachment of, for example, grass seeds. Grass seeds can be applied during production before the biotisation solution, applied to the cultivation medium, has dried, without the risk of germination caused by a wet surface.

A further object of the present invention is a method for producing a cultivation mixture for pressure injection towards plant roots, wherein said method comprises the steps of:
- producing the cultivation medium in the form of granules or pellets having a size of at most 4 mm, preferably having a size in the range of from 1 to 4 mm, according to the method described above;
- mixing said granules or pellets with expanded clay in a weight ratio in the range of from 1: 10 to 1:20, based on the dry weight of the cultivation medium and of the expanded clay, wherein the expanded clay particles have a size of at most 4 mm, preferably from 1 to 4 mm.

Another object of the present invention is the use the cultivation medium according to the present invention in agriculture, forestry and/or horticulture.

Yet another object of the present invention is the use the cultivation mixture for pressure injection towards plant roots.

### Brief Description of Drawings

Fig. 1: Test sheets with different amounts of biochar paste.
Fig. 2: Scheme of the production of a plant cultivation mixture and products based on this mixture.
Fig. 3: Effect of biochar (BC) content on breaking length (BL) when applying the mixture - 400 g·m⁻²
Fig. 4: Effect of biochar (BC) content on tensile strength (TS) when applying the mixture - 400 g·m⁻²
Fig. 5: Effect of biochar (BC) content on burst strength (BS) when applying the mixture - 400 g·m⁻²
Fig. 6: Effect of biochar (BC) content on bend tensile strength (BT) when applying the mixture - 200 g·m⁻²
Fig. 7: Testing the effect of the size of the biochar particles on the mechanical properties of the given cultivation medium product when applying the mixture - 400 g·m⁻²
Fig. 8: Structures of arbuscular mycorrhizal fungi in the root cortex of experimental plants. Vesicles (oval formations in the first image, arbuscules - bush-like structures and hyphae in the second image) are stained with Trypan blue.
Fig. 9: Results of long-term NPK release from tested pellets.
Fig. 10: Images of grapevine at harvest time without treatment [A] and using pressure injection [B]

### Examples

### Example 1: Mechanical properties of the cultivation medium (products from the plant cultivation mixture)

The cultivation medium made from the plant cultivation mixture was first subjected to tests of several types of mechanical properties and thus also the determination of the optimal content of biochar paste in the mixture. Five types of mixtures with different percentages of content of biochar paste were tested.

The tested mixtures for testing mechanical properties were prepared by first preparing a biochar paste, which consisted of biochar with a particle size smaller than 0.5 mm. The weight ratio of biochar to aqueous solution was 1:3.

The biochar used was a high-temperature biochar capable of high water and nutrient retention, specifically a biochar produced in the multi-stage two-fire sliding generator described in the patent of Pohořelý M., Picek I., Skoblia S.: Apparatus for multi-stage gasification of carbonaceous fuels. Pat. No. 306239, reaching a biochar production temperature of at least 750 °C and having a secondary autoactivation zone. The input material was wood biomass, mainly debarked spruce. The relevant properties of the biochar used are below:
- H/C < 0.1
- H/C_{org} < 0.1
- C_{org} > 90 wt%
- O/C_{org} < 0.05
- O/C < 0.05
- 12 PAH sum < 0.5 mg/kg
- 16 PAH sum < 0.5 mg/kg
- specific surface, S_{BET} > 400 m²/g
- ash, A^{d} < 5 wt%
when the individual properties of biochar clearly show its high stability (low H/C and O/C ratios), very well developed structure (high S_{BET}) and high purity (very low PAH contents).

The next step was the preparation of the fiber. The fiber used was:
**Variant A** - Primary fiber, specifically sulphate pulp from conifers.
**Variant B** - Secondary fiber, moisture-absorbing cardboard desintegrated on a pulper.
**Variant C** - Primary fiber, natron pulp cooked from hemp and enriched with hemp fibres.

In the case of the primary fiber of Variant A, the pulp was first milled on a Hollander beater to Schöpper-Riegler grades of 20, 40 and 65 SR. In the case of the natron hemp fiber enriched with plant fibres (Variant C), only the milling grade of 40 SR was applied. In the case of secondary fiber (Variant B), the moisture-absorbing cardboard was swollen and desintegrated on a pulper. This was followed by mixing of the above prepared biochar paste with the already prepared fiber (Variants A and B). In Example C, the weight of hemp fibres was half the weight of the fiber used, wherein the resulting weight ratio of the biochar paste (containing 1 part of biochar to 3 parts of water) to the sum of fiber and hemp fibres was 2: 1. This corresponds to a weight ratio of biochar to the sum of fiber and hemp fibres of 1:2. The composition of the individual mixtures is given in Table 1 below. Table 1 gives the weight percentages for an area density of 400 g·m⁻², wherein one test sheet contains approximately 12.5 g of absolutely dry mixture.

**Table 1: Components of mixtures A, B and C per test sheet (wt% of total dry matter)**

| Mixture | | Biochar content | | | |
|---|---|---|---|---|---|
| | | 0% | 20% | 40% | 60% |
| Variant A mixture | Primary fiber sulphate pulp from conifers | 100 | 80 | 60 | 40 |
| | Biochar paste with powdered biochar <0.5 mm | - | 20 | 40 | 60 |
| Variant B mixture | Secondary fiber Moisture-absorbing cardboard | 100 | 80 | 60 | 40 |
| | Biochar paste with powdered biochar <0.5 mm | - | 20 | 40 | 60 |
| Variant C mixture | Primary fiber Natron pulp from hemp | 80 | - | 40 | - |
| | Plant hemp fibres | 20 | - | 20 | - |
| | Biochar paste with powdered biochar <0.5 mm | - | - | 40 | - |

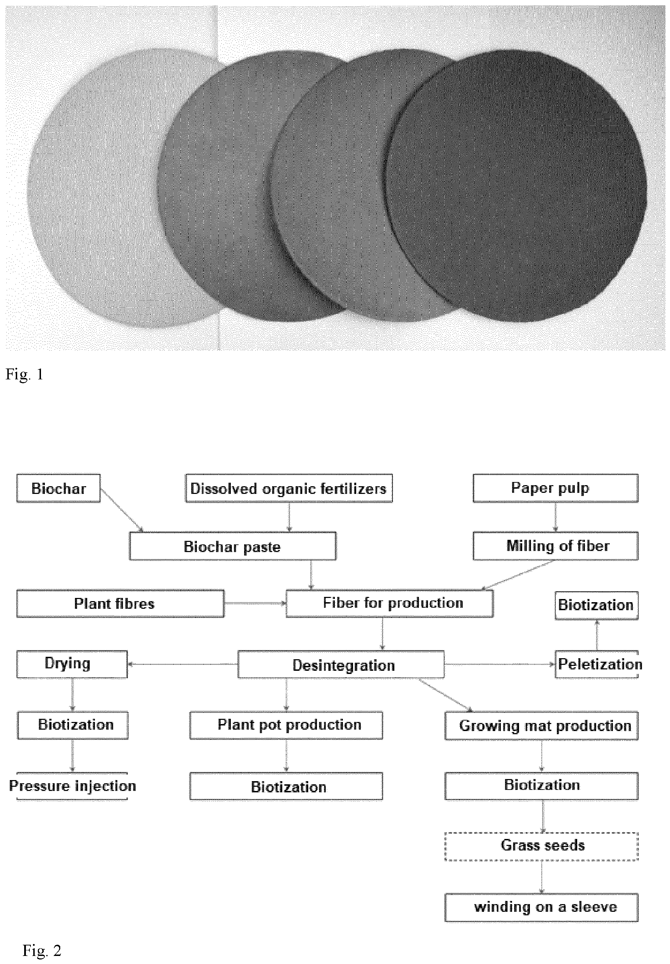

The mixture was moved using water to the pulper, a knife mill, wherein the mixture was homogenised and desintegrated. The mixture thus prepared was formed by means of a laboratory sheeting machine into test sheets by dewatering the suspension of the mixture on a papermaking sieve. The test sheets, Figure 1, were further used to analyse the mechanical properties. The sheets were made with a diameter of 20 cm and two area densities of 200 g·m⁻² (6.25 g of all components in the dry weight of the mixture) and 400 g·m⁻² (12.5 g of all components in the dry weight of the mixture).

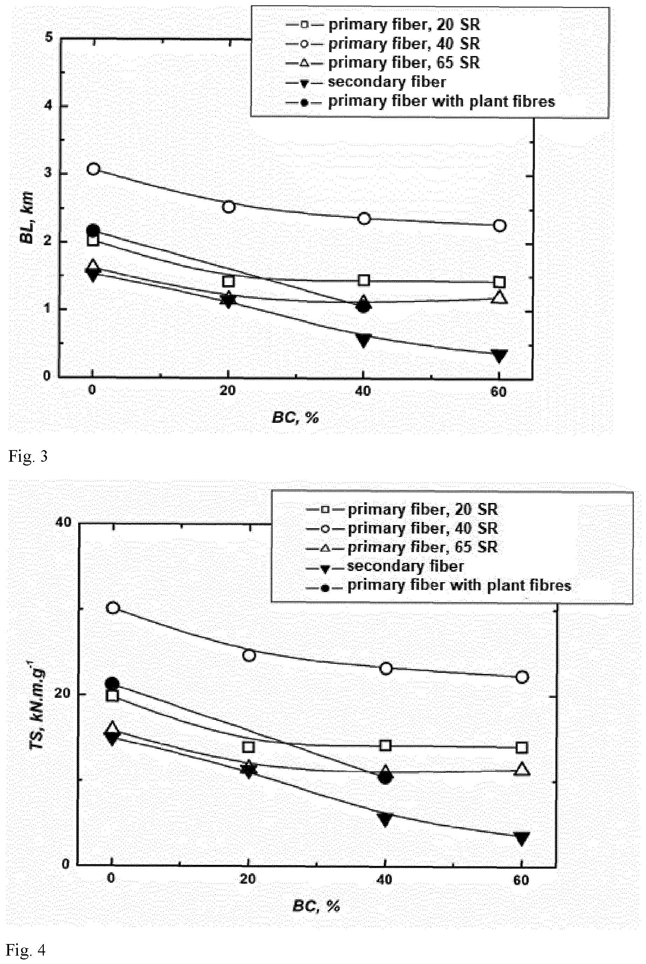

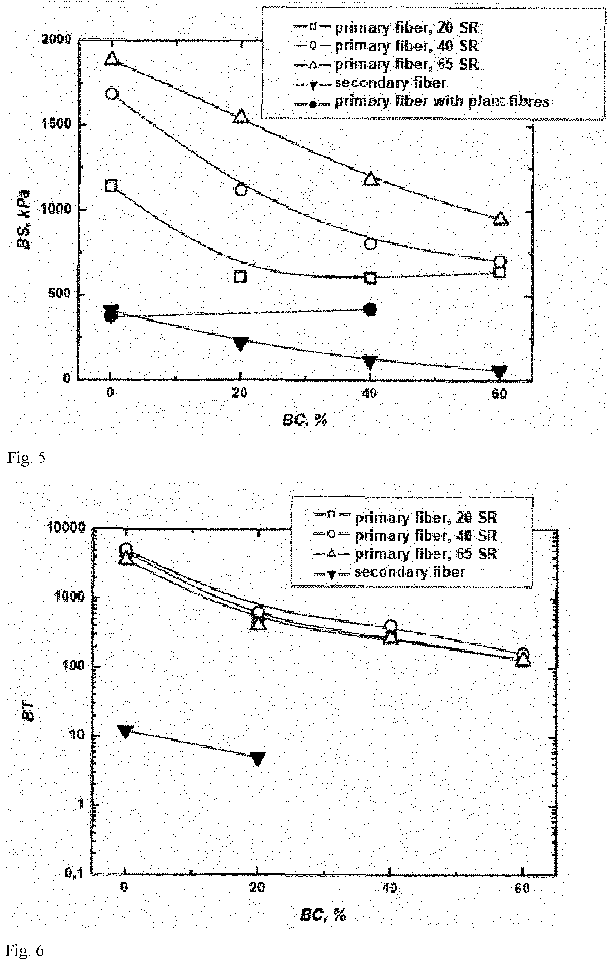

For test sheets with an area density of 400 g·m⁻², strength properties were determined, such as breaking length (BL, Fig. 3), tensile strength (TS, Fig. 4), burst strength - BS, Fig. 5). Bending tensile strength (BT, Fig. 6) was determined for test sheets with a lower area density of 200 g·m⁻². These tests are mechanical tests, when the sample is subjected to an external load; when force is applied to the sample, and various changes - deformations - occur in it. The mechanical properties were determined in accordance with ČSN and ISO standards, and from the resulting values it is possible to determine the practical use of the sample, which is exposed to a tension, pressure or bending loads. The strength of the sample is determined by the strength between the individual fibres and their bond strength. Figs. 3 to 6 show the above-mentioned dependences on the percentage of biochar paste content to the fiber.

It was found that the primary pulp binds biochar better than the secondary pulp; the optimum milling grade of the primary pulp was 40 SR. At lower milling grades, the material does not achieve suitable mechanical properties, and on the contrary, at milling grade of 65 SR, there is a problem with dewatering on the papermaking sieve. SR stands for Schöpper-Riegler grade (a standard unit used in the papermaking industry).

The weight composition of the biochar paste per sheet with an area density of 400 g·m⁻² is 2.5 g for 20%; 5.0 g for 40% and 7.5 g for 60%; this amount is the same for all tested Variants (see Table 1).

The values of the mechanical properties are shown in Figures 3 to 6 below. Since 60 % by weight of biochar paste caused high looseness of the material due to the small amount of pulp and, at the same time, the milling grade of 65 SR was poorly dewatered on the papermaking sieve, the milling grade of 40 SR and biochar paste furnish of 20 and 40 % by weight were used for the following examples.

### Example 2: Testing the effect of biochar particle size on the mechanical properties of a given cultivation media product

The mechanical resistance of the cultivation medium to mechanical load (tensile strength) was tested. Samples of different cultivation media in the form of a rug containing biochar with particle sizes of <0.1 mm; from 0.1 to 0.3 mm; from 0.3 to 0.5 mm; and >0.5 mm, respectively, were used as test materials, using biochar to fiber weight ratios of 1:4; 1:3; 3:7; 3.5:6.5; and 2:3. For these tests, only Variant A as detailed in Example 1 of the present application was used (i.e., coniferous sulphate pulp used as the fiber). The area density of the test sheets was 400 g·m⁻².

The measurements were carried out by fixing a 100 mm × 15 mm strip of the test material/mixture in the jaws of an ISO 1924-2 tensile tester. The jaws are moved apart until the strip tears. In this test, the tear load, given in N·m⁻¹, was determined under the specified conditions. Using the tear load, the tensile strength was calculated, which is the maximum load per unit cross-sectional area that the specimen can withstand without tearing. The tensile strength is given in N·m·g⁻¹ and is calculated using the equation TS = TL/BW, wherein TL is the tear load in N·m⁻¹ and BW is the area density in g·m⁻².

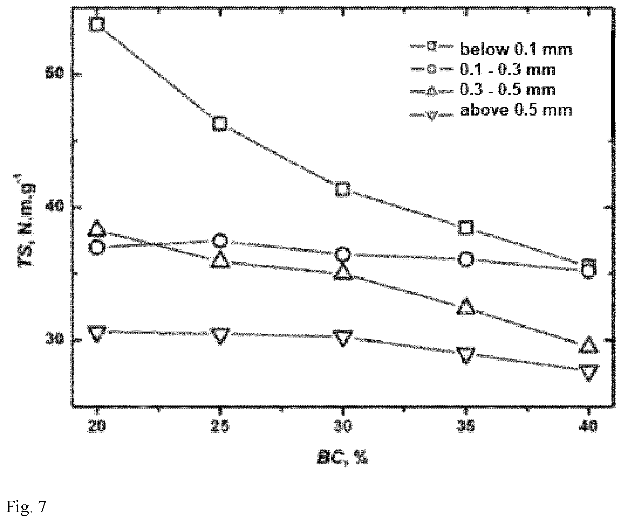

The results indicate that the best mechanical resistance of the tested material is shown by the material using biochar with a fraction below 0.1 mm. However, this strength decreases with the amount of biochar added to the final material, see Figure 7. In the case of testing the 0.1 - 0,3 mm fraction, although this value is lower when using 20% biochar (compared to the fraction below 0.1 mm), this value does not decrease with increasing amounts of biochar in the resulting material. On the contrary, the material containing the fraction of biochar with a particle size of above 0.5 mm without larger parts has the lowest tensile strength. In the case when larger biochar particles (e.g. above 2.0 mm) were used, a significantly lower value of tensile strength (including its impracticality of use in the production of the resulting material) can be clearly assumed. On the other hand, for the production of the different shapes of the cultivation medium from the mixture tested, it is clear that the use of biochar with a particle size of up to 0.5 mm is optimal in terms of the resulting mechanical properties.

### Example 3: Production of a mixture with fertilisers for growing plants and products based on this mixture

The plant cultivation mixture and the cultivation medium according to the present invention were made according to the scheme in Fig. 2. First, a biochar paste was prepared, which consisted of a carrier medium (fertiliser solution, described below) mixed with biochar having a particle size of less than 0.5 mm. The weight ratio of biochar to fertiliser solution was 1:3. The biochar used was the same high-temperature biochar capable of high water and nutrient retention as used in Example 1.

The fertiliser solution was formulated so that the resulting NPK was contained in a ratio of 8:5:10. The fertilisers (patentkali and dolophos) were milled to particles smaller than 0.1 mm and dissolved in the aqueous extract of vermicompost. The resulting 1kg of biochar paste contained 400 g of NPK.

Aqueous vermicompost extract is a highly concentrated liquid natural fertiliser containing large amounts of minerals, enzymes and nutrients, which is produced as a by-product of vermicomposting. Patentkali is a water soluble fertiliser containing K₂O, MgO and SO₃. Dolophos is a slowly soluble fertiliser containing P₂O₅, CaO and partly also MgO.

The next step was the preparation of the fiber, using the same Variants A, Band C as in Example 1. In addition, **Variant D** was prepared using only the primary fiber and the natron pulp from hemp without the addition of hemp fibres.

In the case of the primary fiber, the pulp was first milled on a Hollander beater to a Schöpper-Riegler grade of only 40 SR, because of the fact that milling the fiber leads to better acceptance of the biochar paste on the fibres, but at higher milling grades the dewatering of the fibre is problematic, therefore 40 SR was chosen as the optimum milling grade. In the case of the secondary fiber, the moisture-absorbing cardboard was swollen and desintegrated on a pulper (Variant B). However, this variant was not used further in tests and examples.

Further, mixing of the above prepared biochar paste with the already prepared fiber (Variants A, C and D) followed at the weight ratio of biochar paste to fiber of 2.7, corresponding to a weight ratio of biochar to fiber of 0.68. In Example C, hemp fibres were added to the mixture (the weight of hemp fibres was half the weight of the fiber used), wherein the resulting weight ratio of biochar paste (containing 1 part of biochar to 3 parts of fertiliser solution) to the sum of fiber and hemp fibres was 2: 1. This corresponds to a weight ratio of biochar to the sum of fiber and plant fibres of 1:2. The ratio of biochar paste to fiber corresponds to Example 1. The composition of the biochar paste, which now also contains fertilisers, is as follows, based on the absolute dry matter of the mixture: powdered biochar less than 0.5 mm 9.58 % by weight, dolophos 9.22 % by weight, patentkali 3.23 % by weight and vermitea 17.96 % by weight in each sheet tested. The test sheets were prepared by placing the mixture (biochar mixture and fiber, and eventually plant fibres) into a pulper using water, wherein the mixture was homogenised and desintegrated. The mixture thus prepared was formed using a papermaking sieve in a laboratory sheeting machine and then dried at 65 °C (residual moisture content < 0.05 by volume, corresponding to approximately < 2 wt% of water). The test sheets were only made with the area density of 400 g·m⁻² and a diameter of 20 cm, corresponding to 12.5 g of mixture on a dry weight basis.

### Example 4: Production of a rug containing the plant cultivation mixture

The rug containing the plant cultivation mixture according to the present invention was produced according to the scheme in Fig. 2. The homogenised mixture from Example 2 (Variants A, C and D) was dewatered on a flat papermaking sieve and dried at a temperature of 65 °C (residual moisture <0.05 volume moisture, which corresponds to approx. <2% by weight of water). In the final stage, the resulting product was biotised by spraying with the use of a solution of gum arabic, water, mycorrhizal fungi and microorganisms directly onto the product. The solution used for biotisation contained a powdered culture of 3 arbuscular mycorrhizal fungi (Glomus mosseae, Glomus intraradices, Glomus deserticola) at a total concentration of 5,000 spores per 1 gram of powder concentrate, a powdered culture of Trichoderma harzianum of 10¹⁰ CFU per 1 gram of concentrate and four species of bacteria (Bacillus subtilis, Bacillus licheniformis, Bacillus velezensis, Bacillus megaterium), all of them with 1 g of powdered lyophilised culture with a concentration of 10⁹ CFU per 1 gram of concentrate. The resulting amount of total biotisation was 2,560 spores of mycorrhizal fungi and 4.96·10⁹ CFU of microorganisms per kg of dry weight of the mixture, which corresponds to 500 spores·m⁻² and 10⁹ CFU of microorganisms ·m⁻². The biotisation solution contained 4 % by weight of gum arabic (4 g per 100 ml of distilled water), the dose of biotisation mixture of AM fungi and bacteria and Trichoderma was 3.1 g of mixture of all the above powders in the same weight ratio per 100 g of water. One gram of the biotisation mixture thus contained approx. 25 spores of mycorrhizal fungi and 4.8·10⁷ CFU of microorganisms.

The area density of the material used to make the rug was 200 g·m⁻².

### Example 5: Production of a pot containing the plant cultivation mixture

The scheme of the pot manufacturing process is shown in Fig. 2. The homogenised mixture from Example 2 (Variants A, C and D) was dewatered by vacuum on a pot-shaped papermaking sieve and dried analogously to the rug from Example 4.

Subsequent biotisation was carried out according to the process described in Example 4, i.e. with the aim of achieving at least 500 spores·m⁻² and 10⁹ CFU of microorganisms·m⁻². The area density of the resulting cultivation medium in this case was 400 g·m⁻², i.e. the total biotisation was 1,280 spores of mycorrhizal fungi and 2.48·10⁹ CFU of microorganisms per kilogram of dry weight of the mixture.

### Example 6: Pellet preparation and testing to monitor the gradual release of nutrients

A mixture for the production of pellets was as well prepared by the procedure described in Example 2. In this case, however, only 20 % by weight of the biochar paste prepared according to Example 2 was used (the weight ratio of biochar to fertiliser solution was 1:3) and 80 % by weight of the combined fiber and plant fibres (containing 15 wt% wheat straw, 15 wt% hemp fibres and 50 wt% softwood cellulose), based on the dry weight of the mixture.

The mixture prepared in this way was subsequently homogenised and desintegrated using a screw mill in the range of speeds of 300-650 rpm, which corresponded to a torque in the range of from 30 to 60% and corresponded to a production amount in the range of from 25 to 150 kg/hour (specifically 25, 50, 100 and 150 kg/hour). The desintegrated mixture was pelletised on a pelleting press into different shapes with different pellet sizes, which were biotised in the final stage according to the procedure described in Example 4, using the biotisation solution according to Example 4. The total biotisation of the pellets was 500 spores·m⁻² and 10⁹ CFU of microorganisms·m⁻². Due to increasing temperature above 80 °C during the pelletisation (which would lead to a sterilisation of the biotisation used in the given mixture), it is necessary to carry out this biotisation step only on the resulting pellets. The pellets produced had size in the range of from 2 to 3 cm.

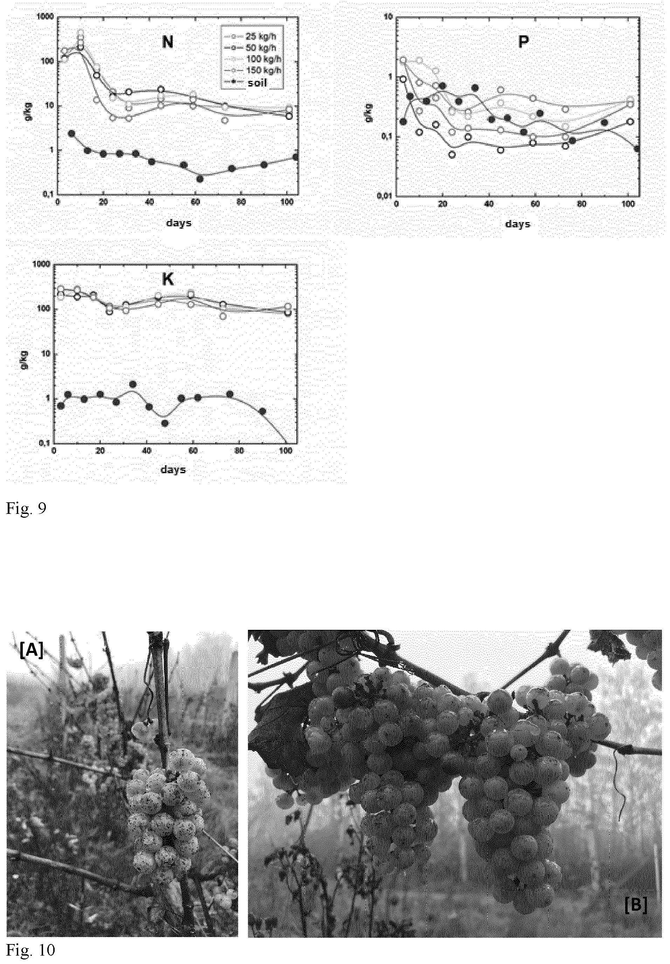

The produced pellets were subjected to a long-term incubation experiment (continuous measurement was carried out for about 6 months). A quantity of pellets weighing 5.5 g was placed in an incubation container with 25 ml of water. The analysed pellets were tested for the milling speed of the suspension for pellet production (suspension production speeds of 25, 50, 100 and 150 kg/hour) and how the suspension production speed affects the release of the different substances. A rhizon (a vacuum sampler for collecting water that is filtered through 0.45 µm) was placed in each incubation container with the pellet samples. For each sample, elemental analysis was performed at predetermined time intervals, focusing on the major nutrients. The graphs presented (Fig. 9) show an order of magnitude increase in released N and K after the addition of the tested pellets, and this increase is constant over time. Thus, these results indicate a long-term and gradual release of the studied nutrients from the tested pellets. In the case of phosphorus release, however, this effect was not observed, which is probably due to the generally low solubility of phosphorus.

For the four types of pellets (differing in desintegration intensity between 25-150 kg/hour), the total bioavailable amount of individual nutrients was also determined using the Mehlich III method. It is a one-step method of extracting the investigated substance (e.g. soil) using a compound containing (0.2M CH₃COOH, 0.015M NH₄F, 0.013M HNO₃, 0.25M NH₄NO₃ and 0.001M ETDA), wherein 100 ml of the extraction solution is used for 10 grams of the sample, which is placed in the shaker for 10 minutes. The results of the bioavailable contents of individual elements show a very high content of K and a high content of Mg but relatively low content of available P (Table 2).

**Table 2 Concentration of bioavailable elements in pellets using the Mehlich III method (mg·kg⁻¹)**

| **Pellet** | **Ca** | **K** | **Mg** | **Na** | **P** | **S** |
|---|---|---|---|---|---|---|
| 25 kg/h | 1053 | 962 | 242 | 40.7 | 34.6 | 494 |
| 50 kg/h | 519 | 702 | 200 | 31.2 | 34.2 | 371 |
| 100 kg/h | 769 | 736 | 196 | 31.6 | 26.0 | 356 |
| 150 kg/h | 904 | 798 | 212 | 34.3 | 36.0 | 401 |

In addition to the composition, the pellets were also tested for disintegration from the point of view of logistics to prevent their damage according to the ISO 4696-1 (2015) standard. The analyses were performed by first compressing the pellets under different pressing pressures of 20, 35 and 50 MPa and then quantifying the amount of particles released in the given fractions below 1 mm (1.0 - 0.3 mm and below 0.3 mm) using sieve analysis. The disintegration analysis clearly shows that even during the strenuous test according to the standard, almost 99% of the pellets remain in their integral form, represented by the fraction above 1.0 mm (see Table 3).

**Table 3 Disintegration of tested pellets**

| **Pellet** | **Pressing pressure (MPa)** | **Fraction (%)** | | |
|---|---|---|---|---|
| | | **<1.0 mm** | **0.3 - 1.0 mm** | **>0.3 mm** |
| 25 kg/hour | 20 | 98.35 | 1.08 | 0.58 |
| | 35 | 99.79 | 0.12 | 0.08 |
| | 50 | 99.87 | 0.08 | 0.05 |
| 50 kg/hour | 20 | 99.48 | 0.30 | 0.22 |
| | 35 | 99.93 | 0.03 | 0.04 |
| | 50 | 99.88 | 0.06 | 0.06 |
| 100 kg/hour | 20 | 99.41 | 0.34 | 0.25 |
| | 35 | 99.64 | 0.22 | 0.15 |
| | 50 | 99.92 | 0.05 | 0.03 |
| 150 kg/hour | 20 | 99.05 | 0.52 | 0.44 |
| | 35 | 99.73 | 0.11 | 0.15 |
| | 50 | 99.84 | 0.07 | 0.09 |

### Example 7: Testing the effect of the material on the germination of mustard seeds

The mixture prepared according to Example 2 (Variants A and C) was subjected to mustard (*Sinapis alba*) seed germination tests. Specifically, 30 seeds were placed on individual test rug samples prepared according to Example 4, filter paper in a 10cm diameter Petri dish was used as a control, and each sample was watered with 10 ml of 5 days aged tap water. The samples were left in the dark for 72 hours at laboratory temperature. After 72 hours, the root length of each plant was accurately measured for each sample. For each sample, the arithmetic mean of root length L in mm was calculated from the two parallel determinations, and the inhibition Iµ (or even stimulation if growth inhibition is less than 0) of root growth in a toxic environment compared to the control was calculated. In the first phase of testing, the synergistic effect of biochar and hemp fiber was clearly demonstrated compared to the use of pulp or the use of hemp fibres alone without biochar. In the second experiment, the effect of individual biotising components was tested, which demonstrate a clear synergy of biochar with AMF, but a negative effect of adding other microorganisms (Trichoderma or bacteria of the genus Bacillus) without the presence of mycorrhizae.

The results of the mustard seed germination are summarized in Table 4 and demonstrate that the individual components of the mixture according to the present invention interact synergistically on seed germination. The key parameter is expressed as relative inhibition of germination, i.e. the higher the negative value the better the result. Thus, Table 4 clearly shows that the presence of biochar has a positive impact on germination, in the case where plant fibres were also added to the primary pulp (-6.3 %) compared to the variant without biochar (16.9 %). However, in the case of using only primary pulp (without addition of plant fibres), the effect of the added biochar was the opposite (6.9%), which is probably due to the amount of sulphates released (from pulp production) that reduce germination; hence the primary pulp (Variant A in Example 2) was discarded for further testing.

In the next step, only primary pulp with plant (specifically hemp) fibres was used (variant C according to Example 2). In this case, the biotisation of the selected primary fiber with plant (hemp) fibres and biochar was tested. From the germination results, it is clear that mycorrhizal symbiosis is essential for the final effect of the biotisation to be positive. Table 4 shows that if only beneficial microorganisms were used, without mycorrhizae (AMF), the effect of biotisation was negative (values 37.4 - 39.6 %). The combination of mycorrhizal symbiosis with the use of Trichoderma was proven to be the most effective biotisation (-20.9%).

**Table 4: Demonstration of the synergistic effect of individual components on mustard seed germination; expressed by relative germination inhibition, AMF - arbuscular mycorrhiza fungi.**

| **Binder** | **Biochar** | **Biotisation** | | | **Relative inhibition Sinapis alba (%)** | **Conductivity (mS.cm⁻¹)** | **pH (-)** |
|---|---|---|---|---|---|---|---|
| Primary pulp with plant fibres | YES | AMF | Trichoderma | - | -20.9 | 4020 | 6.7 |
| Primary pulp with plant fibres | YES | AMF | - | - | -16.5 | 1925 | 6.7 |
| Primary pulp with plant fibres | YES | AMF | - | Bacillus | -8.0 | 1551 | 6.7 |
| Primary pulp with plant fibres | YES | - | - | - | -6.3 | 1788 | 6.7 |
| Primary pulp | YES | - | - | - | 6.9 | 2720 | 6.5 |
| Primary pulp with plant fibres | NO | - | - | - | 16.9 | 275 | 7.1 |
| Primary pulp with plant fibres | YES | - | Trichoderma | - | 37.4 | 13590 | 6.7 |
| Primary pulp with plant fibres | YES | - | - | Bacillus | 39.6 | 1909 | 6.9 |

### Example 8: Pressure injection of dry granulated cultivation mixture to the grapevine roots

A mixture for the production of granulate (<4 mm) was also prepared using the procedure described in Example 6.

The mixture thus prepared was then homogenised and desintegrated using a screw mill at a speed of 300 - 650 rpm, corresponding to a torque in the range of 30 - 60% and a production quantity in the range of from 25 to 150 kg/hour (specifically 25, 50, 100 and 150 kg/hour). The desintegrated mixture was pelletised on a pelleting press into pellets of maximum size of 4 mm, which were finally biotised according to the procedure described in Example 4, using the biotisation solution according to Example 4. The total granulate biotisation was 500 spores·m⁻² and 10⁹ CFU of microorganisms·m⁻². Due to increasing temperature above 80 °C during the pelletisation (which would lead to sterilisation of the biotisation used in the given mixture), this biotisation must be performed only on the final granulate. Said granulate thus prepared was mixed with expanded clay in a weight ratio of 1: 10, based on the dry weight of the mixture. The maximum particle size of the expanded clay was 4 mm.

The injection itself was then carried out with a 40cm long needle, which first aerated the soil below the surface (in the rhizosphere) under a high pressure of 8 bar. Then, the cultivation mixture of granulate and expanded clay was forced into the resulting cavities. The location of the injections was chosen about 0.5 m from each grapevine trunk on both sides (forming single rows) at a dose of about 250 g. This treatment was carried out at the beginning of the growing season (end of March), and the subsequent harvest took place during the same year's vintage season (October).

The results obtained on grapevine clearly show the positive effect of the injection on the vitality of the treated bushes and especially the grapes. As shown in Fig. 10, the pressure-injected bushes visually demonstrate a better quality of grapes (no visible necroses). Moreover, during the harvest, the treated grapes showed greater ripeness and a higher amount of juice produced (by about 10-20 %) compared to the untreated variant.

This grape juice was subsequently subjected to a chemical analysis, from which the difference in their quality is visible, which is demonstrated above all by the malic acid content, which is lower in the case of the treated variant (1,739 vs. 1,870 mg/l in favour of the variant treated by pressure injection of the granulated mixture). This indicator points to the higher quality of the grapes intended for wine production, because during the production of the wines, a high amount of malic acid in the process of malolactic fermentation turns into lactic acid, the increased content of which reduces the quality of the resulting wine.

### Example 9: Pot experiment - testing the growth of corn (Zea Mais)

In this case, the bulk mixture from Example 8 was used to demonstrate the synergistic effect of the biochar and the applied biotisation on the growth of a selected agricultural crop sensitive to nutrient deficiency and drought.

As part of the container experiment, the growth reaction of model corn plants was monitored to exclude the phytotoxicity of the tested material and biotisation for the formation of a functional mycorrhizal symbiosis and a positive effect on plant growth. In this case, Regozem soil type with low retention capacity and low content of organic matter was used; i.e. the soil easily and often suffering from agricultural drought. The experiment was carried out in greenhouse conditions, wherein conventional growing pots with a volume of 0.6 1 were each filled with 300 g of the soil, which was each treated with 15 g of injection cultivation mixture, with the following composition: (1) control mixture without biochar and without biotisation (containing expanded clay only); mixture with only biotisation without biochar; mixture with only biochar without biotising component; and a complete mixture with biochar and biotisation according to Example 8. Each variant was made in 5 repetitions. Two corn seeds were added to each prepared pot with soil and mixture. The experiment lasted for 24 weeks, when each pot was regularly watered in order to reach field capacity conditions (determined before the start of the experiment by setting the target value of volumetric moisture, when this value was continuously monitored using sensors for measuring soil moisture). In the last 4 weeks, the watering amount was reduced to 70% of the volume to simulate stress conditions. At the end of the experiment, above-ground biomass was collected from each pot and subsequently dried in an oven at a temperature of 60 °C. The weight of the biomass was then measured and statistically compared.

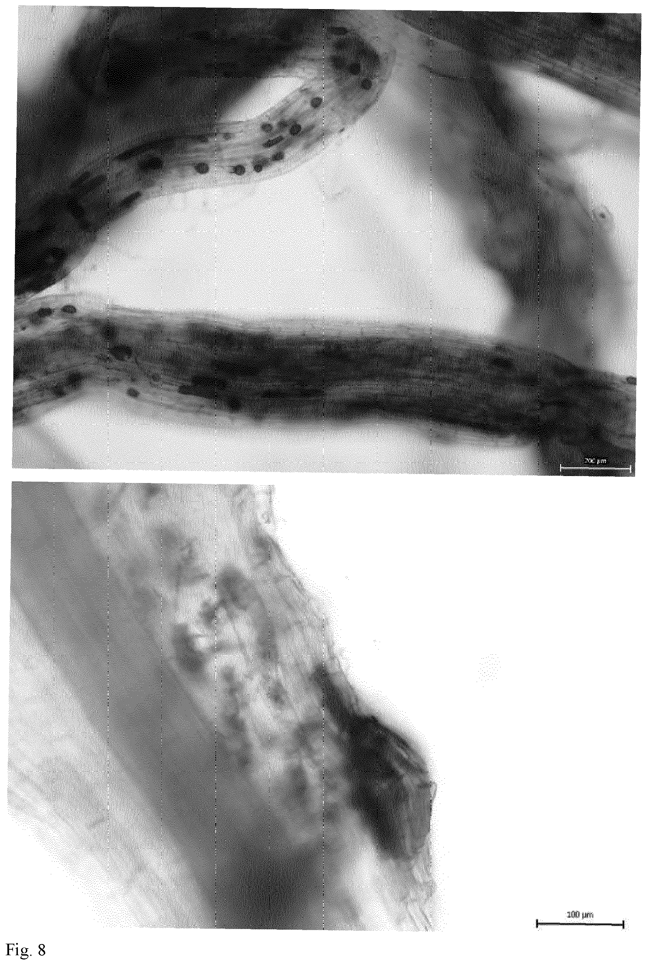

The results of the experiment (see Table 5) clearly show that the treated variants demonstrated a statistically significantly higher production of corn biomass, ranging from 33 to 69 % compared to the control variant. While the presence of biotisation alone increased the biomass production of corn grown on problematic light sandy soil (lacking organic matter) by only 33%, in the presence of biochar this biomass production increased by 50%. This fact is primarily caused by supplying organic matter to the soil leading to better retention of water/nutrients in the given light soil, while the development of mycorrhizal symbiosis, as a living organism, is primarily conditioned by adequate conditions in the soil (= sufficient soil water and necessary nutrients). The combined variant according to the present invention, which contains both biochar and biotisation, had the best biomass production results (biomass increase of 69 %). The presence of biochar therefore provides: (i) sufficient retention capacity of the soil (given precisely by the increase of organic matter in the soil); and (ii) support for the development of microbial activity, which in this case is demonstrated by the development of mycorrhizal symbiosis (the presence of arbuscules and vesicles on corn roots, see Fig. 8).

**Table 5 Results of above-ground biomass production of corn (Zea Mais) after treatment with biochar mixture and inoculation with mycorrhizal symbiosis. Values are presented as arithmetic mean ± standard deviation (always from 5 replications). Different letters represent statistically different values (at 95% significance/confidence level).**

| **Variant** | **Above-ground biomass (g)** |
|---|---|
| Control (with expanded clay) | 28.65 ± 1.87 ^{c} |
| Inoculation without biochar | 38.29 ± 1.49 ^{bc} |
| Biochar without inoculation | 43.13 ± 1.80 ^{ab} |
| Biochar with inoculation | 48.43 ± 2.14 ^{a} |

## Claims

1. A cultivation medium, **characterized in that** it is in the form of a granulate or in the form of a pellet, growing rug, pot or planter, and which comprises a plant cultivation mixture comprising biochar and fiber, wherein the weight ratio of biochar to fiber is in the range of from 1:80 to 5:2, and wherein the biochar particle size is at most 0.5 mm;
and which further comprises at least 250 spores of mycorrhizal fungi per 1 kg of dry weight of the mixture, wherein the mycorrhizal fungi are selected from the group comprising arbuscular mycorrhizal fungi, ectomycorrhizal fungi, ericoid mycorrhizal fungi, mycoparasitic fungi, yeasts and actinomycetes,
and at least 5·10⁸ CFU of microorganisms for plant growth enhancement per 1 kg of dry weight of the mixture, wherein the microorganisms are selected from the group comprising rhizobacteria, microalgae and cyanobacteria;
wherein the quantity of mycorrhizal fungi is at least 500 spores·m⁻² of the cultivation medium and the quantity of microorganisms for plant growth enhancement is at least 10⁹ CFU·m⁻² of the cultivation medium.

2. The cultivation medium according to claim 1, **characterized in that** the plant cultivation mixture further comprises plant fibres, preferably selected from the group comprising hemp fibres, fibrous residues from agricultural and forestry production, macroalgae,
wherein the weight ratio of biochar to the total mass of fiber and plant fibres is in the range of from 1:99 to 1:1.

3. The cultivation medium according to claim 1 or 2, **characterized in that** the plant cultivation mixture further comprises a fertilizer, preferably selected from the group comprising aqueous vermicompost extract, peptides, amino acids, algae, manure, guano, digestate, or any of PK, NP and NPK fertilisers.

4. The cultivation medium according to any one of the preceding claims 1 to 3, **characterized in that** the fiber is selected from the group comprising lignocellulosic fiber, primary or secondary fiber, sulphate pulp, natron pulp.

5. The cultivation medium according to any one of the preceding claims 1 to 4, **characterized in that** the mycorrhizal fungi are selected from the group comprising genera Funneliformis, Rhizophagus, Glomus, Gigaspora, Acaulospora, Laccaria, Scleroderma, Pisolithus, Hebeloma, Amanita, Rhizopogon, Boletus, Suillus, Sebacina, Hymenoscyphus, Oidiodendron.

6. The cultivation medium according to any one of the preceding claims 1 to 5, **characterized in that** the microorganisms for plant growth enhancement are selected from the group comprising genera Pseudomonas, Bacillus, Azotobacter, Serratia, Paenibacillus, Azospirillum, Rhizobium, Bradyrhizobium, Burkholderia, Herbaspirillum, Rhodococcus, Acetobacter, Lycobacter, Agrobacterium, Scenedesmus, Chlorella, Dunadiella, Chlamydomonas, Botryococcus, Spirulina, Nannochloropsis, Schizochytrium, Synechocistis, Anabaena and Nostoc, Trichoderma, Pythium, Aspergillus, Coniothyrium, Gliocladium, Purpureocillium, Phlebiopsis, Beuaveria, Streptomyces, Rhodotorula, Sporobolomyces, Cryptococcus, Frankia, Phialocephalla, Pezizales and Taphrinales.

7. A method for producing the cultivation medium according to any one of claims 1 to 6, **characterized in that** it comprises the following steps:
(a) biochar with a particle size of at most 0.5 mm is mixed with a carrier medium in a weight ratio in the range of from 10:1 to 1:3, to form a biochar paste; wherein the carrier medium is water and/or aqueous vermicompost extract and/or an aqueous solution of fertilisers;
(b) the biochar paste from step (a) is mixed with fiber and, optionally, with plant fibres, wherein the weight ratio of the biochar paste to the sum of the fiber and optional plant fibres is in the range of from 0.01 to 4;
(c) the mixture from step (b) is homogenised and subsequently desintegrated;
(d) the desintegrated mixture from step (c) is made into a growing rug, pot or planter by draining the desintegrated mixture on a sieve to form a growing rug, a pot or a planter;
or the desintegrated mixture from step (d) is made into granules or pellets;
(e) a biotisation solution is applied onto the product from step (d), wherein said biotisation solution comprises mycorrhizal fungi selected from the group comprising arbuscular mycorrhizal fungi, ectomycorrhizal fungi, ericoid mycorrhizal fungi, mycoparasitic fungi, yeasts and actinomycetes; and microorganisms for plant growth enhancement, selected from the group comprising rhizobacteria, microalgae and cyanobacteria.

8. The method according to claim 7, **characterized in that** the biotisation solution in step (e) comprises an aqueous solution of a powdered culture of the arbuscular mycorrhizal fungi Glomus mosseae, Glomus intraradices and Glomus deserticola; a powdered culture of Trichoderma harzianum; and powdered cultures of bacteria of genera Bacillus subtilis, Bacillus licheniformis, Bacillus velezensis, and Bacillus megatherium in the weight ration of all powdered cultures of 1:1:1:1:1:1, wherein the powdered culture of the arbuscular mycorrhizal fungi contains a total of 5,000 spores per 1 gram of powder; and wherein the powdered culture of Trichoderma harzianum contains 10¹⁰ CFU per 1 gram of powder; and wherein the powdered cultures of bacteria of genera Bacillus subtilis, Bacillus licheniformis, Bacillus velezensis and Bacillus megatherium each contain 10¹⁰ CFU per 1 gram of the powder culture;
preferably, the resulting biotisation solution has a concentration in the range of from 1 to 10 grams of the total amount of powdered cultures per 100 g of solution.

9. A cultivation mixture for pressure injection towards plant roots, **characterized in that** it comprises the cultivation medium in the form of granules or pellets according to any one of claims 1 to 6, and further expanded clay in a weight ratio in the range of from 1:10 to 1:20, based on the dry weight of the cultivation medium and of the expanded clay.

10. The cultivation mixture according to claim 9, **characterized in that** the granules, pellets and particles of expanded clay have size of at most 4 mm, preferably a size in the range of from 1 to 4 mm.

11. A method of production of the cultivation misture according to claim 9 or 10, **characterized in that** it comprises steps of:
- producing the cultivation medium in the form of granules or pellets having a size of at most 4 mm, preferably having a size in the range of from 1 to 4 mm, according to the method according to claim 7 or 8;
- mixing said granules or pellets with expanded clay in a weight ratio in the range of from 1:10 to 1:20, based on the dry weight of the cultivation medium and of the expanded clay, wherein the expanded clay particles have a size of at most 4 mm, preferably from 1 to 4 mm.

12. Use of the cultivation medium according to any one of the preceding claims 1 to 6 in agriculture, forestry and/or horticulture.

13. Use of the cultivation mixture according to any one of the claims 9 or 10 for pressure inj ection towards plant roots.
